Europäisches Patentamt

European Patent Office

Office européen des brevets

(19)

(11) Veröffentlichungsnummer: **0 075 758**

**B2**

(12) **NEUE EUROPÄISCHE PATENTSCHRIFT**

(45) Veröffentlichungstag der neuen Patentschrift:
06.06.90

(51) Int. Cl.$^5$: **C 08 G 18/48**

(21) Anmeldenummer: 82108287.2

(22) Anmeldetag: 09.09.82

(54) **Verfahren zur Herstellung von elastischen Polyurethan-Weichschaumstoffen.**

(30) Priorität: 18.09.81 DE 3137132

(43) Veröffentlichungstag der Anmeldung:
06.04.83 Patentblatt 83/14

(45) Bekanntmachung des Hinweises auf die
Patenterteilung:
06.08.86 Patenblatt 86/32

(45) Bekanntmachung des Hinweises auf die
Entscheidung über den Einspruch:
06.06.90 Patentblatt 90/23

(84) Benannte Vertragsstaaten:
AT BE CH DE FR GB IT LI NL SE

(56) Entgegenhaltungen:
EP-A-0 047 371
DE-A-2 415 733
FR-A-1 413 774
FR-A-2 357 592
GB-A-1 089 140
US-A-3 164 568
US-A-4 243 760

G. Woods, "Developments in Polyurethanes",
Applied Science Publishers Ltd., 1978; S. 82

Technical Information Brochure "Daltocel T32-
75" der Firma ICI, veröff. Sept. 1974

Kunststoff-Handbuch, Bd. VII, "Polyurethane", 1.
Aufl. 1966, S. 64

Plaste und Kautschuk 29 (1982), Heft 10, S.
557-560

(73) Patentinhaber: BASF Aktiengesellschaft
Carl-Bosch-Strasse 38
D-6700 Ludwigshafen (DE)

(72) Erfinder: Buethe, Ingolf, Dr.
Am Wasserturm 1
D-6737 Boehl-Iggelheim (DE)
Erfinder: Straehle, Wolfgang, Dr.
Hirschgasse 20
D-6900 Heidelberg (DE)
Erfinder: Marx, Matthias, Dr.
Seebacher Strasse 49
D-6702 Bad Duerkheim (DE)
Erfinder: Peters, Reinhard, Dr.
Am Stadtpark 30A
D-8000 Muenchen (DE)

Courier Press, Leamington Spa, England.

**EP 0 075 758 B2**

**Beschreibung**

Die Herstellung von Polyurethan(PUR)-Weichschaumstoffen durch Umsetzung von organischen Polyisocyanaten mit Polyolen und gegebenenfalls Kettenverlängerungs- oder Vernetzungsmitteln in Gegenwart von Treibmitteln und Katalysatoren sowie gegebenenfalls Hilfsmitteln und Zusatzstoffen ist aus zahlreichen Patent- und Literaturveröffentlichungen bekannt. Verweisen möchten wir beispielsweise auf die Monographien von J. H. Saunders und K. C. Frisch, High Polymers, Band XVI «Polyurethanes», Teil I und II (Verlag Interscience Publishers, New York 1962 bzw. 1964) und R. Vieweg und A. Höchtlen, Kunstoff-Handbuch, Band VII, Polyurethane, Carl Hanser Verlag, München 1966.

Um allen Anwendungsgebieten gerecht zu werden, müssen die Polyurethanschaumstoffe bei möglichst niedrigem Raumgewicht ein hohes mechanisches Eigenschaftsniveau aufweisen, das sich in einer hohen Reissdehnung, Zugfestigkeit, Weiterreissfestigkeit und Stauchhärte manifestiert.

Eine optimale Ausnutzung der Produktionsanlagen wird durch kurze Abbindezeiten der Schaumstoffe gewährleistet.

Durch welche Verfahrensmassnahmen das mechanische Eigenschaftsniveau beeinflusst werden kann, ist ausserdem bekannt. Die Stauchhärte kann beispielsweise durch eine Erhöhung der Kennzahl verbessert werden; durch diese Massnahme wird jedoch gleichzeitig die Bruchdehnung erniedrigt (Kunststoff-Handbuch, Band VII, Polyurethane, Seiten 478—486). Derartige gegenläufige Eigenschaftsvershiebungen, die vielfach auftreten, sind unerwünscht.

Die Aufgabe der vorliegenden Erfindung berstand darin, bei PUR-Weichschaumstoffen mit guten mechanischen Eigenschaften die Reissdehnung zu verbessern, ohne dass dadurch die übrigen mechanischen Eigenschaften negative beeinflusst werden. Ferner sollte die Abbindezeit de Schaumstoffe verkürzt und dadurch die Produktionskapität erhöht werden.

Diese Aufgabe konnte überraschenderweise durch die Verwendung von bestimmten Blockpolyetherpolyolen mit einem hohen Gehalt an primären Hydroxylgruppen bei einem vergleichbar geringen Anteil an polymerisierten endständigen Ethylenoxideinheiten zur Herstellung der Weichschaumstoffe gelöst werden.

Gegenstand der Erfindung ist ein Verfahren zur Herstellung von elastischen Polyurethan-Weichschaumstoffen, wobei man zunächst in einer ersten Stufe Polyoxyalkylen-Polyoxyethylen-polyole mit endständigen Oyxethylengruppen herstellt, die einen Ethoxilierungsgrad von 1 bis 13 und einen Gehalt an primären Hydroxylgruppen beim entsprechenden Ethoxilierungsgrad, unter Berücksichtigung der ungesättigten Anteile, mindestens vom Werte der Kurve A besitzen, wobei die Kurve A die Abhängigkeit des Gehalts an primären Hydroxylgruppen vom Ethoxilierungsgrad beschreibt, indem mann

a) an di- bis tetrafunktionelle Startermoleküle mit Molekulargewichten bis 198 aus der Gruppe der Polyamine und Polyole Alkylenoxyde aus der Gruppe von 1,2- und 2,3-Butylenoxid, gegebenenfalls an der Phenylgruppe substituierten Styroloxiden, Cyclohexenoxid und 1,2-Propylenoxid oder Mischungen aus den genannten Alkylenoxiden und Ethylenoxid im Gewichtsverhältnis von 100:0 bis 60:40 in Gegenwart von 0,01 bis 0,25 Mol basischem Katalysator pro Äquivalent Zerewitinoff-aktivem Wasserstoffatom des Startermoleküls bis zu einem Umsatz von mindestens 20 Gew.-% des zugeführten Alkylenoxids anlagert,

b) danach mit fortschreitender Polymerisation die Katalysatormenge gegebenenfalls stufenweise auf 0,1 bis 0,3 Mol erhöht und anschließend

c) das erhaltene rohe Polyether-polyol mit maximal 30 Gew.% Ethylenoxid, bezogen auf das Gewicht des rohen Polyethers-polyols, in Gegenwart von 0,1 bis 1,0 Mol basischen Katalysators pro Äquivalent des reaktiven Waserstoffatoms, nachpolymerisiert, wobei

d) nach jeder Katalysatorzugabe das bzw. der bei der Alkoholatbildung entstehende Wasser oder niedrigsiedende Alkohol abgetrennt wird und nach Beginn der Polymerisation vor jeder zusätzlichen Katalysatorzugabe die nicht umgesetzten Alkylenoxide abgetrennt werden, und danach in einer zweiten Stufe das so erhaltene Block-Polyether-Polyol mit aliphatischen, cycloaliphatischen, araliphatischen oder aromatischen Polyisocyanaten in Gegenwart von Treibmitteln, Katalysatoren und gegebenenfalls Kettenverlängerungs- oder Vernetzungsmitteln, Hilfsmitteln und/oder Zusatzstoffen umsetzt.

Vorteilhaft ist ferner, dass neben der Erhöhung der Reissdehnung und Verkürzung der Abbindezeit, die Neigung der PUR-Weichschaumstoffe zum Schrumpfen vermindert wird, d.h. die PUR-Weichshaumstoffe werden offenzelliger, während das übrige mechanische Eigenschaftsniveau praktisch unverändert erhalten bleibt.

Zur Herstellung der PUR-Weichschaumstoffe nach dem erfindungsgemässen Verfahren eignen sich die an sich bekannten aliphatischen, cycloaliphatischen, arylaliphatischen und vorzugsweise aromatischen mehrwertigen Isocyante. Im einzelnen seien biespielhaft genannt: aliphatische Diisocyanate, wie Ethylen-, 1,4-Tetramethylen-, 1,6-Hexamethylen- und 1,12-Dodecandiisocyanat; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan, 2,4- und 2,6-Hexahydrotluylen-diisocyanat sowie beliebige Gemische dieser Isomeren, 4,4'- und 2,4'-Diisocyanato-dicyclohexylmethan; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat; aromatische Polyisocyanate wie 4,4',4''-Triphenylmethan-triisocyanat, 2,4,6-Triisocyanatobenzol und Polyphenyl-polymethylen-polyisocyanate. Verwendet werden können ferner

2

modifizierte Polyisocyanate, beispielsweise solche wie sie in der US—PS 3 492 330 beschrieben werden, Carbodiimidgruppen aufweisende Polyisocyanate (DE—PS 1 092 007), Allophanatgruppen aufweisende Polyisocyanate (GB—PS 994 890; BE—PS 761 626), Isocyanuratgruppen aufweisende Polyisocyanate (DE—PS 1 022 789, DE—PS 1 222 067, DE—PS 1 027 394, DE—OS 1 929 034 und DE—OS 2 004 048), Urethangruppen aufweisende Polyisocyanate (BE—PS 752 261, US—PS 3 394 164), Biuretgruppen aufweisende Polyisocyanate (DE—PS 1 101 394, GB—PS 889 050) und Estergruppen aufweisende Polyisocyanate (GB—PS 965 474, GB—PS 1 072 956, US—PS 3 567 763, DE—PS 1 231 688).

Bevorzugt verwendet werden die technisch gut zugänglichen, gegebenenfalls Urethangruppen aufweisenden, aromatischen Di- und Polyisocyante wie 2,4- und 2,6-Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'-, 4,4'-Diphenylmethan-diisocyanaten und Polyphenyl-polymethylen-polyisocyanaten (Roh-MDI) und Gemische aus Toluylen-diisocyanaten und Roh-MDI. Die genannten Di- und Polyisocyanate können einzeln oder in Form von Mischungen eingesetzt werden.

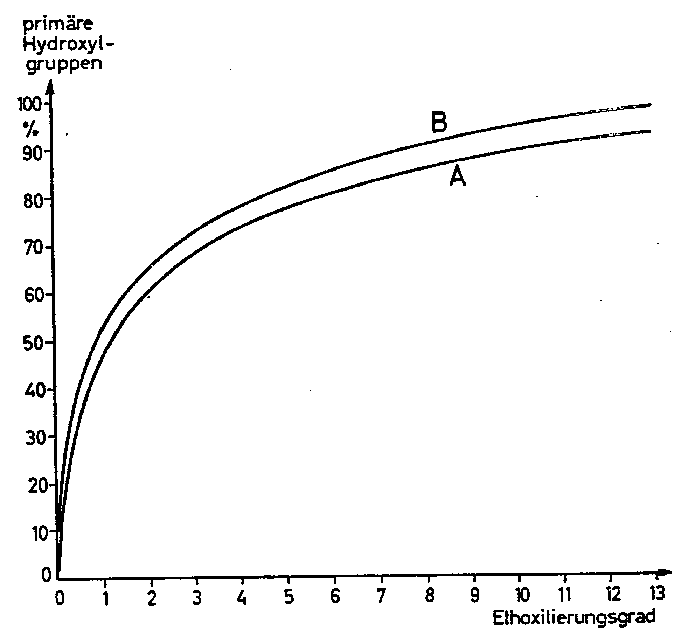

Wesentliches Merkmal der vorliegenden Erfindung ist die Verwendung von bestimmten hochaktivierten Polyoxyalkylen-Polyoxy-ethylen-polyolen mit endständigen Oxyethylengruppe als Blockpolyetherpolyole. Diese Polyoxyalkylen-Polyethylen-polyole mit Ethoxilierungsgraden von 1 bis 13, vorzugsweise 2 bis 8, haben einen Gehalt an primären Hydroxylgruppen beim entsprechenden Ethoxilierungsgrad mindestens vom Werte der Kurve A, vorzugsweise mindestens vom Werte de Kurve B gemäss der Abbildung, wobei die Kurven A und B die Abhängigkeit des Gehalts an primären Hydroxylgruppen vom Ethoxilierungsgrad beschreiben. Der Ethoxilierungsgrad wird hierbei definiert als der Quotient aus der Molzahl der endständigen Oxyethyleneinheiten und der Funktionalität der Polyoxyalkylen-polyoxyethylen-polyole. Im einzelnen besitzen die erfindungsgemäss verwendbaren Polyoxyalkylen-polyoxyethylen-polyole in Abhängigkeit vom Ethoxilierungsgrad folgenden Mindestgehalt an primären Hydroxylgruppen:

TABELLE

| Ethoxilierungsgrad | Gehalt an primären Hydroxylgruppen [%] A | B (Vorzugsbereich) |
|---|---|---|
| 1 | 46,8 | 52 |
| 1,5 | 54,3 | 59,5 |
| 2 | 59,7 | 65,0 |
| 2,5 | 63,9 | 69,0 |
| 3 | 67,3 | 72,5 |
| 3,5 | 70,2 | 75,5 |
| 4 | 72,7 | 78 |
| 4,5 | 74,9 | 80 |
| 5 | 76,8 | 82 |
| 5,5 | 78,8 | 84 |
| 6 | 80,2 | 85,5 |
| 7 | 83,1 | 88,2 |
| 8 | 85,6 | 90,7 |
| 9 | 87,8 | 93 |
| 10 | 89,8 | 95 |
| 11 | 91,0 | 96 |
| 12 | 92,0 | 97 |
| 13 | 93,0 | 98 |

Die in der Tabelle angegebenen Werte liegen auf den Kurven A bzw. B.

**EP 0 075 758 B2**

Die Herstellung der erfindungsgemäss verwendbaren Polyoxyalkylen-Polyoxyethylen-polyole, die in der DE—A—3 030 737 (= EP—A—0 047 371) beschrieben ist, erfolgt in mehreren Stufen.

In der ersten Stufe werden bestimmte gegebenenfalls substituierte Alkylenoxide, gegebenfalls in mischung mit Ethylenoxid in Gegenwart von zu Beginn der Reaktion 0,01 bis 0,25 Mol, vorzugsweise 0,10 bis 0,25 Mol basischem Katalysator pro Äquivalent Zerewitinoff aktivem Wasserstoffatom des Startermoleküls polymerisiert. Mit fortschreitender Polymerisation und damit verbundener Erhöhung des Molekulargewichts der Polymerisate verbessert sich die Mischbarkeit der Alkylenoxide mit dem Reaktionsmedium. In dieser zweiten Reaktionsmedium. In dieser zweiten Reaktionsstufe, die nach einem Umsatz von mindestens 20 Gew.% der zugeführten gegebenenfalls substituierten Alkylenoxide, gegebenenfalls im Gemisch mit Ethylenoxid, beginnt, kann die Katalysatormenge stufenweise oder in einem Schritt erhöht werden, so dass 0,10 bis 0,3 Mol, vorzugsweise 0,12 bis 0,3 Mol basischer Katalysator pro Äquivalent Zerewitinoff aktivem Wasserstoffatom des Startermoleküls im Reaktionsgemisch vorliegen. Hierbei hat es sich als vorteilhaft erwiesen, proÄquivalent Zerewitinoff aktivem Wasserstoffatom des Startermoleküls für den Hydroxylzahlbereich gleich oder grösser als 25 0,1 bis 0,3 Mol und für den Hydroxylzahlbereich kleiner als 25 0,12 bis 0,3 Mol basischen Katalysator einzusetzen. Erfolgt die Erhöhung der Katalysatormenge stufenweise, so wird nach jeder Katalysatorzugabe weiter polymerisiert, solange bis ein Umsatz von 100 Gew.% erreicht ist. Es ist jedoch auch möglich, bis zu einem 100gew.%igen Umsatz zu polymerisieren und dann die Katalysatormenge in einem Schritt zu erhöhen.

Sofern eine Erhöhung der primären Hydroxylgruppen um weniger als ungefähr 12% gewünscht wird, hat es sich als vorteilhaft erwiesen, die Katalysatorkonzentration mit fortschreitender Polymerisation nicht zu erhöhen, sondern bereits zu Beginn der Polymerisation 0,10 bis 0,25 Mol, insbesondere 0,12 bis 0,18 Mol basischen Katalysator pro Äquivalent Zerewitinoff aktivem Wasserstoffatom des Startermoleküles, einzusetzen.

Das erhaltene rohe Polyether-polyol wird in einer 3. Stufe in Gegenwart von 0,10 bis 1,0 Mol basischem Katalysator pro reaktivem Wasserstoffatom mit maximal 30 Gewichtsprozent, vorzugsweise 5 bis 20 Gewichtsprozent und insbesondere 10 bis 18 Gewichtsprozent Ethylenoxid, bezogen auf das Gewicht des rohen Polyether-olyols, nachpolymerisiert. 8,8 bis 30 Gew.-% Ethylenoxid ergeben je nach Äquivalentgewicht des Polyether-polyols, z.B. beim Äquivalentgewicht von 500 Ethoxilierungsgrade von 1 bis 3,5. 4,4 bis 30 Gew.-% Ethylenoxid ergeben beim Äquivalentgewicht 1000 einen Ethoxilierungsgrad von 1 bis 6,8 und 2,2 bis 30 Gew.-% Ethylenoxid beim Äquivalentgewicht 2000 einen solchen von 1 bis 13,6.

Im einzelnen werden die Polyoxyalkylen-polyoxyethylen-polyole vorteilhafterweise wie folgt hergestellt:

Die hydroxylgruppenhaltigen Startermoleküle — werden aminogruppenhaltige Verbindungen verwendet, so wird zunächst an jedes Äquivalent reaktiven Wasserstoff mindestens ein Mol Alkylenoxid addiert und das erhaltene Additionsprodukt als Startermolekül eingesetzt — werden mit 0,01 bis 0,25 Mol mindestens eines basischen Katalysators pro Äquivalent Hydroxylgruppe partiell in die entsprechenden Alkoholate übergeführt. Je nach verwendetem Katalysator wird danach gebildetes Wasser oder niedrig siedender Alkohol, zweckmässigerweise unter vermindertem Druck, abdestilliert und bei Temperaturen von 50° bis 150°C, vorzugsweise 80°C bis 130°C, die gegebenenfalls mit einem unter den Reaktionsbedingungen inerten Gas, beispielsweise Stickstoff, verdünnten gegebenenfalls substituierten Alkylenoxide oder Mischungen aus den gegebenenfalls substituierten Alkylenoxiden und Ethylenoxid im Gewichtsverhältnis von 100:0 bis 60:40, vorzugsweise von 99,5:0,5 bis 80:20 in dem Masse wie sie abreagieren, beispielsweise in 4 bis 30 Stunden, vorzugsweise 6 bis 10 Stunden bei Atmosphärendruck oder gegebenenfalls unter erhöhtem Druck bei 1,1 bis 20 bar, vorzugsweise 1,1 bis 7 bar in das Reaktionsmedium eingetragen.

Nach einem Umsatz von mindestens 20 Gew.% kann die Polymerisation gegebenenfalls zur Erhöhung der Katalysatorkonzentration unterbrochen werden. Da hierzu jedoch zunächst die nicht umgesetzten gegebenenfalls Ethylenoxid haltigen gegebenenfalls substituierten Alkylenoxide vorzugsweise unter vermindertem Druck abgetrennt werden und nach der Katalysatorzugabe gebildetes Wasser oder niedrigsiedender Alkohol abdestilliert werden muss, bevor die Polymerisation fortgesetzt werden kann und sich dieser Vorgang bei der stufenweisen Erhöhung der Katalysatormenge mehrfach, beispielsweise 2 bis 10 fach wiederholen kann, hat es sich aus ökonomischen Gründen als vorteilhaft erwiesen, so dass diese Verfahrensweise bevorzugt angewandt wird, die Polymerisation zu Ende zu führen, d.h. bis zu einem Umsatz von ungefähr 100 Gew.% zu polymerisieren, bevor die Katalysatorkonzentration erhöht wird.

Nach dieser bevorzugten Verfahrensvariante wird nach Beendigung der Polymerisation ebenfalls das überschüssige gegebenenfalls Ethylenoxid haltige gegebenenfalls substituierte Alkylenoxid bei Temperaturen von 100°C bis 150°C unter vermindertem Druck abdestilliert, in einem Schritt die Katalysatormenge erhöht, das erhaltene rohe Polyether-polyol partiell oder vollständig in das Alkoholat übergeführt und unter den obengenannten Reaktionsbedingungen mit maximal 30 Gewichtsprozent Ethylenoxid, bezogen auf das Polyether-polyolgemisch, nachpolymerisiert.

Die so hergestellten alkalihaltigen Polyoxyalkylen-polyoxyethylen-polyole werden nach Abdestillation des überschüssigen Ethylenoxid mit anorganischen Säuren, wie z.B. Schwefelsäure, Salzsäure oder Phosphorsäure, sauer reagierenden Salzen, wie z.B. Kaliumhydrogenphosphat, organischen Säuren, wie z.B. Zitronensäure, Tartronsäure u.a. oder Ionenaustauschern neutralisiert und nach bekannten Methoden gereinigt.

4

Geeignete gegebenenfalls substituierte Alkylenoxide mit 2 bis 4 Kohlenstoffatomen in der Alkylenkette und Molekulargewichten von 44 bis 120, vorzugsweise 44 bis 72 sind beispielsweise 1,2- und 2,3-Butylenoxid, gegebenenfalls an der Phenylgruppe substituierte Styroloxide, Cyclohexenoxid, und vorzugsweise 1,2-Propylenoxid. Zu der genannten Verbindungsklasse gehört auch Ethylenoxid, das jedoch in der Beschreibung stets separat davon genannt wird. Zur Herstellung der rohen, zur Nachpolymerisation verwendbaren Polyether-polyole können die gegebenenfalls substituierten Alkylenoxide einzeln, alternierend nacheinander, als Mischungen oder als Ethylenoxid haltige Mischungen eingesetzt werden.

Als Startermoleküle kommen di- bis tetrafunktionelle Polyamine und Polyole und vorzugsweise di- bis trifunktionelle Polyole in Betracht. Im einzelnen seien beispielhaft genannt:

Hydrazin, aliphatische und aromatische, gegebenenfalls N-mono- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethane; Alkanolamine, wie Ethanolamin, Diethanolamin, N-Methyl- und N-Ethyl-dialkanolamine, wie N-Methyl- und N-Ethyl-diethanolamin und Triethanolamin. Vorzugsweise verwendet werden mehrwertige, insbesondere zwei- und/oder dreiwertige Alkohole, wie Ethylenglykol, 1,2- und 1,3-Propylenglykol, Diethylenglykol, Dipropylenglykol, 1,4-Butylenglykol, 1,6-Hexamethylenglykol, Glycerin, Trimethylol-propan und Pentaerythrit.

Gebräuchliche Katalysatoren sind Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, wie Lithium-, Cäsium- und insbesondere Natrium- und Kaliumhydroxid.

Die erfindungsgemäss verwendbaren Polyoxyalkylen-polyoxyethylen-polyole sind di- bis tetrafunktionell, vorzugsweise di- bis trifunktionell und besitzen Hydroxylzahlen von 10 bis 250, vorzugsweise 10 bis 75 und insbesondere von 20 bis 56. Die Produkte sind bei der Umsetzung mit organischen Polyisocyanaten und/oder ihren Urethan-, Carbodiimid-, Isocyanurat- oder Harnstoffgruppen modifizierten Derivaten ausserordentlich reaktiv. Produkte mit einem geringen Gehalt an Oxyethyleneinheiten zeichnen sich ausserdem durch eine verbesserte Mischbarkeit mit aromatischen Polyisocyanaten aus.

Die erfindungsgemäss verwendbaren Polyoxyalkylen-polyoxyethylen-polyole können einzeln oder in Form von Mischungen zur Anwendung kommen. Bewährt haben sich auch Mischungen aus Polyoxyalkylen-polyoxyethylen-polyolen und handelsüblichen Polyether-polyolen, sofern die Mischungen mindestens 40 Gew.%, vorzugsweise 60 bis ungefähr 100 Gew.%, bezogen auf das Gesamtgewicht, Polyoxyalkylen-polyoxyethylenpolyol enthalten. Unter handelsüblichen Polyether-polyolen sind im Sinne der Erfindung auch Pfropfpolymerisat-Polyether-polyole oder Füllstoff-Polyether-polyol-Dispersionen zu verstehen.

Gegebenenfalls kann es zweckmässig sein, neben den genannten Polyoxyalkylen-polyoxyethylen-polyolen und gegebenenfalls handelsüblichen Polyether-polyolen zur Einführung von Hartsegmenten in den PUR-Weichschaumstoff Kettenverlängerungs- oder Vernetzungsmittel mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin-1,4, Hexamethylendiamin-1,6, 4,4'-Diaminodiphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 KOhlenstoffatomen, wie Ethylenglykol, 1,4-Butylenglykol, 1,6-Hexamethylenglykol, Glyzerin und Trimethylolpropan.

Sofern Ketternverlängerungs- oder Vernetzungsmittel eingesetzt werden, kommen diese in Mengen von 1 bis 10 Gew.-Teilen, vorzugsweise von 1 bis 4 Gew.-Teilen pro 100 Gew.-Teilen Polyoxyalkylen-Polyoxyethylen-polyol zur Anwendung.

Zu Treibmitteln, welche im erfindungsgemässen Verfahren verwendet werden können, gehört vorzugsweise Wasser, das mit Isocyanatgruppen unter Bildung von Kohlendioxid reagiert. Die Wassermengen, die zweckmässigerweise verwendet werden, betragen 0,5 bis 20 Gewichtsteile, vorzugsweise 1,5 bis 10 Gewichtsteile, und insbesondere 2 bis 6 Gewichtsteile, bezogen auf 100 Gewichtsteile Polyoxyalkylen-Polyoxyethylen-polyole und gegebenenfalls übliche Polyether-polyole.

Im Gemisch mit Wasser können auch physikalisch wirkende Treibmittel eingesetzt werden. Geeignet sind Flüssigkeiten, welche gegenüber den organischen Polyisocyanaten inert sind und Siedepunkte unter 100°C, vorzugsweise unter 50°C, insbesondere zwischen −50°C und 30°C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 40 Gewichtsteile, vorzugsweise 0 bis 20 Gewichtsteile pro 100 Gewichtsteile Polyoxyalkylen-polyoxyethylen-polyol und gegebenenfalls Polyether-polyol. Gegebenenfalls kann es zweckmässig sein, das organische Polyisocyanat mit dem physikalisch wirkenden Treibmittel zu mischen und dadurch die Viskosität zu verringern.

Zur Beschleunigung der Umsetzung zwischen den Polyoxyalkylen-Polyoxyethylen-polyolen, Wasser und gegebenenfalls Kettenverlängerungs- oder Vernetzungsmittel und den organischen Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-ethylether, Bis-(dimethylaminopropyl)-harnstoff, N-Methyl- bzw. N-Ethylmorpholin, dimethylpiperazin, Pyridin, 1,2-Dimethylimidazol, 1-Azobicyclo-(3,3,0)-octan, Dimethylaminoethanol, N,N',N''-Tris-(di-alkylaminoalkyl)-hexahydrotriazine, z.B. N,N',N''-Tris-(dimethylaminopropyl)-s-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmässigerweise 0,1 bis 10 Gew.%, vorzugsweise 0,5 bis 5 Gew.% Katalysator auf Basis tertiärer Amine und/oder 0,01 bis 0,5 Gew.% vorzugsweise 0,05 bis 0,25 Gew.% Metallsalze, bezogen auf das Gewicht der Polyoxyalkylen-Polyoxyethylen-polyole und gegenbenenfalls Polyether-polyole.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile Polyoxyalkylen-polyoxyethylen-polyol und gegebenenfalls Polyether-polyol angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrolmischungen in Polyetherpolyolen analog den Angaben der deutschen Patentschriften 1 111 394, 1 222 669, (US 3 304 273, 3 383 351, 3 523 093) 1 152 536 (GB 1 040 452) und 1 152 537 (GB 987 618) hergestellt werden sowie Fillerpolyole, bei denen wässrige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff-Polyether-polyol-Dispersionen, bei denen die Füllstoffe in Gegenwart von Polyetherpolyolen in situ mit hohen örtlichen Energiedichten auf eine Teilchengrösse kleiner als 7 μm zerkleinert und hiebei gleichzeitig dispergiert werden. Füllstoff-Polyether-polyol-Dispersionen dieser Art werden beispielsweise in den deutschen Offenlegungsschriften 2 850 609, 2 850 610 und 2 932 304 beschrieben.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Poloxyalkylen-polyoxy-ethylen-polyol-Mischung einverleibt, Geeignete Flammschutzmittel sind beispielsweise Trikresylphosphat, Tris-2-chlorethylphosphat, Tris-chlorpropylphosphat und Tris-2,3-dibrompropylphosphat.

Ausser den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivate zum Flammfestmachen der PUR-Weichschaumstoffe verwendet werden. Im allgemeinen hat es sich als zweckmässig erweisen, 5 bis 50 Gewichtsteile, vorzugsweise 5 bis 25 Gewichtsteile der genannten Flammschutzmittel für jeweils 100 Gewichtsteile an Polyoxyalkylen-polyoxyethylenpolyol zu verwenden.

Nähere Angaben über die obengenannten anderen üblichen Hilfs- und Zusatzstoffe sind der Fachliteratur, beispielsweise der Monographie von J. H. Saunders und K. C. Frisch «High Polymers» Band XVI, Polyurethanes, Teil 1 und 2, Verlag Interscience Publishers 1962 bzw. 1964, zu entnehmen.

Zur Herstellung der PUR-Weichschaumstoffe nach dem erfindungsgemässen Verfahren werden die organischen Polyisocyanate und Polyoxyalkylen-polyoxyethylen-polyole und gegebenenfalls Polyether-polyole, Kettenverlängerungs- und Vernetzungsmittel in Gegenwart von Katalysatoren, Treibmitteln und gegebenenfalls Hilfsmitteln und Zusatzstoffen bei Temperaturen von 0 bis 70°C, vorzugsweise 15 bis 50°C in solchen Mengenverhältnissen zur Reaktion gebracht, dass pro NCO-Gruppe 0,5 bis 2, vorzugsweise 0,8 bis 1,6 und insbesondere ungefähr ein reaktive(s) Wasserstoffatom(e) gebunden an Polyoxyalkylen-polyoxyethylen-polyol, Wasser gegebenenfalls Polyether-polyol und Kettenverlängerungs- oder Vernetzungsmittel vorliegen.

Die PUR-Weichschaumstoffe werden nach dem Präpolymer- und vorzugsweise dem one shot-Verfahren hergestellt. Nach dem one shot-Verfahren werden die Ausgangskomponenten, Hilfsmittel und Zusatzstoffe bei Verwendung einer Mischkammer mit mehreren Zulaufdüsen einzeln zugeführt und in der Mischkammer intensiv vermischt. Als besonders zweckmässig hat es sich jedoch erwiesen, so dass diese Verfahrensweise bevorzugt angewandt wird, nach dem Zweikomponenten-Verfahren zu arbeiten und die Polyoxyalkylen-Polyoxyethylen-polyole, Katalysatoren, Treibmittel und gegebenenfalls Polyether-polyole, Kettenverlängerungs- oder Vernetzungsmittel, Hilfsmittel und Zusatzstoffe zu der sogenannten A-Komponente zu vereinigen und als B-Komponente die organischen, gegebenenfalls modifizierten Polyisocyanate gegebenenfalls im Gemisch mit physikalisch wirkenden Treibmitteln, Hilfsmitteln und Zusatzstoffen zu verwenden. Vorteilhaft ist hierbei, dass die A- und B-Komponente raumsparend transportiert und beschränkte Zeit gelagert werden können und vor Herstellung der PUR-Weichschaumstoffe nur noch intensiv gemischt werden müssen.

Die nach dem erfindungsgemässen Verfahren hergestellten PUR-Weichschaumstoffe besitzen Dichten von 7 bis 120 kg/m³, vorzugsweise 25 bis 60 kg/m³ und zeichnen sich durch eine erhöhte Reissdehnung bei sehr guten mechanischen Eigenschaften aus.

Die hochelastischen PUR-Weichschaumstoffe eignen sich zur Herstellung von Polstermöbeln, Matratzen, Automobilsitzen und Nackenstützen sowie insbesondere für Formschaumstoffe.

Die in den Beispielen genannten Teile beziehen sich auf das Gewicht.

Herstellung der erfindungsgemäss verwendbaren Polyoxyalkylen-polyoxyethylen-polyole 1—4 und der Vergleichssubstanzen A und B.

Allgemeine Herstellungsvorschrift

Die hydroxylgruppenhaltigen Polyoxyalkylenpolyoxyethylenether werden nach einem 3 oder 4 Stufenverfahren hergestellt, wobei sich die Oxalkylierung jedoch je nach den technischen Gegebenheiten gegebenenfalls in noch mehr Reaktionsstufen unterteilen lässt. Nach einem Umsatz von 100 Gew.% wird die Katalysatorkonzentration in einem Schritt mit unterschiedlichen Katalysatormengen erhöht und mit Ethylenoxid nachpolymerisiert.

1. Stufe:

Das Startermolekül wird im Reaktor vorgelegt und mit einer 45 gewichtsprozentigen wässrigen Kaliumhydroxidlösung gemischt. Zur Bildung des Alkoholats wird die Mischung unter vermindertem Druck und Abdestillieren von Wasser 1,5 Stunden auf 130°C erwärmt.

2. Stufe:

Das Propylenoxid und gegebenenfalls Ethyleoxid werden bei einer Temperatur von 105°C in einer solchen Menge zugeführt, dass ein Druck von maximal 7 bar nicht überschritten wird. Nach Beendigung der Propylenoxidzugabe und einer Nachreaktion von 4 bis 5 Stunden wird die Reaktionsmischung zur Abtrennung des Restmonomeren gestrippt.

3. Stufe:

Die Reaktionsmischung wird mit zusätzlichem Katalysator gemischt und zur Abtrennung des bei der Alkoholatbildung entstehenden Reaktionswassersolange unter vermindertem Druck auf 120°C erwärmt bis kein Wasser mehr abdestilliert.

4. Stufe:

Das Ethylenoxid wird analog der 2. Stufe bei 105°C und einem maximalen Druck von 5 bar zudosiert. Nach Abreaktion des Ethylenoxids wird die Reaktionsmischung zur Entfernung der Restmonomeren unter vermindertem Druck gestrippt und nach bekannten Methoden aufgearbeitet.

Die verwendeten Augangskomponenten und deren Mengen sowie die Kenndaten der erhaltenen Polyoxyalkylen-polyoxyethylen-polyole sind in Tabelle 1 zusammengefasst.

Tabelle 1

| Polyoxyalkylen-polyoxyethylen-polyole | | | | | | | | |
|---|---|---|---|---|---|---|---|---|
| Ausgangskom-<br>ponenten | Beispiele<br>Vergleichs-<br>substanz | 1 | 2 | 3 | 4 | A | B | |
| Reaktionsbedingungen | | | | | | | | |
| 1. Stufe: Starter: Glycerin | [g] | 92,09 | 103,29 | 103,29 | 92,09 | 72,3 | 92,09 | |
| 45 gew.%ige wäßrige KOH | [g] | 37,40 | 26,67 | 26,67 | 13,4 | 16,1 | 13,4 | |
| KOH/reaktive H-Atome | [Mol] | 0,1 | 0,063 | 0,063 | 0,036 | 0,054 | 0,036 | |
| 2. Stufe: Propylenoxid | [g] | 4079 | 5483 | 5307 | 2384 | 3483,9 | 2596 und<br>136 g Ethy-<br>lenoxid | |
| max. Druck | [bar] | 5,8 | 6,8 | 6,7 | 6,7 | 6,8 | 5,5 | |
| Hydroxylzahl | | 37,0 | 38,0 | 38,5 | 68 | 40,2 | 68 | |
| 3. Stufe: 45 gew.%ige wäßrige KOH | [g] | – | 393,5 | 392,7 | 74,8 | – | – | |
| KOH/reaktive H-Atome | [Mol] | – | 0,937 | 0,93 | 0,2 | – | – | |
| 4. Stufe: Ethylenoxid | [g] | 636,7 | 392,7 | 589,6 | 523 | 567 | 174 | |
| Ethoxilierungsgrad* | | 4,82 | 2,65 | 4,0 | 4,0 | 5,47 | 1,32 | |
| max. Druck | [bar] | 4,5 | 3,5 | 3,6 | 3,5 | 4,7 | 4,5 | |
| Polyoxyalkylenpolyoxy-ethylen-polyol: | | | | | | | | |
| Hydroxylzahl | | 35,2 | 36 | 35 | 56,8 | 34,8 | 56 | |
| primäre Hydroxylgruppen | [%] | 85 | 75 | 85 | 80 | 75 | 45 | |
| ungesättigte Anteile | [Gew.%] | 0,06 | 0,052 | 0,06 | 0,013 | 0,058 | 0,02 | |
| Säurezahl | | 0,01 | 0,05 | 0,05 | 0,01 | 0,01 | 0,01 | |
| Wassergehalt | [Gew.%] | 0,03 | 0,10 | 0,10 | 0,05 | 0,04 | 0,01 | |

*unter Berücksichtigung der ungesättigten Anteile

Herstellung von Polyurethan-Weichschaumstoffen.

## Beispiel 5

Eine mischung aus

100 Gew.-Teilen des Polyether-polyols nach Beispiel 1,

2,8 Gew.-Teilen Wasser,

1,0 Gew.-Teilen Diazabicyclooctan (33 gew.%ig in Dipropylenglykol) und

0,5 Gew.-Teilen eines Schaumstabilisators auf Silikonbasis (®Tebostab B 4690 der Firma Goldschmidt, Essen) wird mit

35,2 Gew.-Teilen eines Gemisches aus 80 Gew.-Teilen 2,4- und 2,6-Toluylendiisocyanat (Gewichtsverhältnis 80:20) und 20 Gew.-Teilen einer Mischung aus Diphenylmethan-diisocyanaten und Polyphenyl-polymethylenpolyisocyanaten (roh-MDI) intensiv gemischt und die erhaltene schaumfähige Mischung in einer offenen Form aufschäumen gelassen. Die gemessene Abbindezeit des Schaumstoffs beträgt 45 Sekunden.

## Beispiel 6 und Vergleichsbeispiele C und D

Man verfährt analog den Angaben von Beispiel 5, verwendet jedoch die in Tabelle 2 genannten Polyether-polyole.

Tabelle 2

| | Polyether-polyol | Abbindezeit<br>[sec] |
|---|---|---|
| Beispiel 6 | nach Beispiel 4 | 70 |
| Vergleichs-<br>beispiel C | nach Vergleichsbeispiel A | 90 |
| Vergleichs-<br>beispiel D | nach Vergleichsbeispiel B | 120 |

Die Beispiele 5 und 6 bzw. Vergleichsbeispiele C und D zeigen, dass nach dem erfindungsgemässen Verfahren hergestellte Polyurethan-Weichschaumstoffe eine deutlich geringere Abbindezeit besitzen.

# EP 0 075 758 B2

Beispiel 7 und 8 und Vergleichsbeispiel E

Man verfährt analog den Angaben des Beispiels 5, verwendet jedoch die in Tabelle 3 genannten Polyether-polyole.

Zur Herstellung von Formschaumstoffen der Dichte 50 g/l werden 800 g der schaumfähigen Reaktionsmischung in eine Form mit den Dimensionen 40 × 40 × 10 cm eingefüllt, die Form geschlossen und die Reaktionsmischung aufschäumen gelassen.

An den erhaltenen Polyurethan-Weichschaumstoffen wurden folgende mechanische Eigenschaften gemessen.

Tabelle 3

| Beispiele<br>Vergleichsbeispiel | | E | 7 | 8 |
|---|---|---|---|---|
| Polyether-polyol | | | | |
| nach Beispiel | | -- | 2 | 3 |
| nach Vergleichsbeispiel | | A | – | – |
| Dehnung | [%] | 136 | 153 | 157 |
| Härtezahl bei 40% Stauchung | [N] | 220 | 215 | 220 |
| Druckverformungsrest | | | | |
| nach DIN 53 572 | [%] | 4,7 | 3,9 | 3,6 |
| Zugfestigkeit | | | | |
| nach DIN 53 571 | [k.Pa] | 95 | 98 | 102 |
| Weiterreißfestigkeit | | | | |
| nach DIN 53 515 | [N/mm] | 0,48 | 0,51 | 0,53 |
| Offenzelligkeit | | | zunehmend → | |
| Abbindezeit | [Min] | 1,5 | 1,5 | 1,5 |

Die Beispiele zeigen eine verbesserte Dehnung und Offenzeilligkeit der nach dem erfindungsgemässen Verfahren hergestellten Polyurethan-Weichschaumstoffe unter Verwendung von Polyether-polyolen vergleichbarer Reaktivität jedoch geringerem Gehalt an polymerisierten Ethylenoxideinheiten.

**Patentansprüche**

1. Verfahren zur Herstellung von elastischen Polyurethan- Weichschaumstoffen wobei man zunächst in einer ersten Stufe Polyoxyalkylen-Polyoxyethylen-polyole mit endständigen Oxyethylengruppen herstellt, die einen Ethoxilierungsgrad von 1 bis 13 und einen Gehalt an primären Hydroxylgruppen bei entsprechenden Ethoxilierungsgrad, unter Berücksichtigung der ungesättigten Anteile, mindestens vom Werte der Kurve A besitzen, wobei die Kurve A die Abhängigkeit des Gehalts an primären Hydroxylgruppen vom Ethoxilierungsgrad beschreibt, indem man

a) an di- bis tetrafunktionelle Startermoleküle mit Molekulargewichten bis 198 aus der Gruppe der Polyamine und Polyole Alkylenoxyde aus der Gruppe von 1,2- und 2,3-Butylenoxid, gegebenenfalls an der Phenylgruppe substituierten Styroloxiden, Cyclohexenoxid und 1,2-Propylenoxid oder Mischungen aus den genannten Alkylenoxiden und Ethylenoxid im Gewichtsverhältnis von 100:0 bis 60:40 in Gegenwart von 0,01 bis 0,25 Mol basischem Katalysator pro Äquivalent Zerewitinoff-aktivem Wasserstoffatom des Startermoleküls bis zu einem Umsatz von mindestens 20 Gew.-% des zugeführten Alkylenoxids anlagert,

b) danach mit fortschreitender Polymerisation die Katalysatormenge gegebenenfalls stufenweise auf 0,1 bis 0,3 Mol erhöht und anschließend

c) das erhaltene rohe Polyether-polyol mit maximal 30 Gew.% Ethylenoxid, bezogen auf das Gewicht des rohen Polyether-polyols, in Gegenwart von 0,1 bis 1,0 Mol basischen Katalysators pro Äquivalent des reaktiven Wasserstoffatoms, nachpolymerisiert, wobei

d) nach jeder Katalysatorzugabe das bzw. der bei der Alkoholatbildung entstehende Wasser oder niedrigsiedende Alkohol abgetrennt wird und nach Beginn der Polymerisation vor jeder zusätzlichen Katalysatorzugabe die nicht umgesetzten Alkylenoxide abgetrennt werden, und danach in einer zweiten Stufe das so erhaltene Block-Polyether-Polyol mit aliphatischen, cycloaliphatischen, araliphatischen oder aromatischen Polyisocyanaten in Gegenwart von Treibmitteln, Katalysatoren und gegebenenfalls Kettenverlängerungs- oder Vernetzungsmitteln, Hilfsmitteln und/oder Zusatzstoffen umsetzt.

2. Verfahren nach Anspruch 1, dadurch gekennzeichnet, dass die Polyoxyalkylen-Polyoxyethylen-polyole Funktionalitäten von 2 bis 4 und Hydroxylzahlen von 10 bis 250 besitzen.

3. Verfahren nach Anspruch 1, dadurch gekennzeichnet, dass die Polyoxyalkylen-polyoxyethylen-polyole Ethoxilierungsgrade von 2 bis 8 besitzen.

4. Verfahren nach Anspruch 1, dadurch gekennzeichnet, dass man die Polyoxyalkylen-polyoxyethylen-polyole im Gemisch mit üblichen Polyether-polyolen verwendet.

5. Verfahren nach Anspruch 4, dadurch gekennzeichnet, dass das Gemisch mindestens 40 Gew.% Polyoxyalkylen-Polyoxyethylen-polyole, bezogen auf das Gesamtgewicht, enthält.

6. Verfahren nach Anspruch 4, dadurch gekennzeichnet, dass man die üblichen Polyether-polyole in Form von Pfropfpolymerisat-Polyether-polyolen oder Füllstoff-Polyether-polyol-Dispersionen verwendet.

7. Verfahren nach Anspruch 1, dadurch gekennzeichnet, dass man als Treibmittel Wasser in einer Menge von 0,5 bis 20 Gew.-Teilen pro 100 Gew.-Teilen Polyoxyalkylen-Polyoxyethylen-polyole und gegebenenfalls üblichen Polyether-polyolen verwendet.

## Revendications

1. Procédé de préparation de mousses de polyuréthane souples élastiques, dans lequel on prépare, dans un premier stade, des polyoxyalkylène-polyoxyéthylène-polyols à groupes oxyéthylène terminaux, qui possèdent un degré d'éthoxylation entre 1 et 13 et une teneur en groupes hydroxyle primaires qui correspond, en y comprenant les fractions insaturées, au moins à la valeur donnée par la courbe A pour le degré d'éthoxylation considéré, la courbe A indiquant la dépendance de la teneur en groupes hydroxyle primaires du degrée d'éthoxylation,

a) en fixant sur les molécules d'amorceurs di- à tétra-fonctionnelles avec des poids moléculaires pouvant aller jusqu'à 198, choisies parmi les polyamines et les polyols, en présence de 0,01 à 0,25 mole d'un catalyseur basique par équivalent d'atome d'hydrogène actif de Zerewitinoff de la molécule d'amorceur, des oxydes d'alkylène choisis parmi l'oxyde de 1,2-butylène, l'oxyde de 2,3-butylène, les oxydes du styrène éventuellemeent substitués sur le groupe phényle, l'oxyde de cyclohexène et l'oxyde de 1,2-propylène, ainsi que les mélanges des oxydes d'alkylène, énumérés et de l'oxyde d'éthylène dans des proportions en poids comprises entre 100:0 et 60:40, jusqu'à la transformation d'au moins 20 en poids de l'oxyde d'alkylène ajouté;

b) en amenant ensuite, éventuellement par portions et au fur et à mesure de la progression de la polymérisation, la proportion du catalyseur entre 0,1 et 0,3 mole;

c) en post-polymérisant le polyéther-polyol brut formé en présence de 0,1 à 1,0 mole de catalyseur basique par équivalent d'atome d'hydrogène actif avec l'oxyde d'éthylène jusqu'à un maximum de 30% du poids du polyéther-polyol brut, et

d) en éliminant avant chaque addition de catalyseur l'eau ou l'alcool à bas point d'ébullition, produit lors de la formation de l'alcoolate et, après le début de la polymérisation, avant chaque addition supplémentaire de catalyseur les oxydes d'alkylène non transformés, puis, dans un deuxième stade, on fait réagir le polyéther-polyol à blocs obtenu, en présence d'agents porogènes, de catalyseurs et éventuellement d'agents de réticulation, d'agents d'allongement des chaînes, d'additifs et(ou) d'adjuvants, avec des polyisocyanates aliphatiques, cycloaliphatiques, araliphatiques ou aromatiques.

2. Procédé suivant la revendication 1, caractérisé en ce que les polyoxyalkylène-polyoxyéthylène-polyols possèdant une fonctionnalité de 2 à 4 et un indice d'hydroxyle compris entre 10 et 250.

3. Procédé suivant la revendication 1, caractérisé en ce que les polyoxyalkylène-polyoxyéthylène-polyols possèdant des degrés d'éthoxylation compris entre 2 et 8.

4. Procédé suivant la revendication 1, caractérisé en ce que les polyoxyalkylène-polyoxyéthylène-polyols sont utilisés en mélange avec des polyéther-polyols usuels.

5. Procédé suivant la revendication 4, caractérisé en ce que le mélange contient au moins 40% en poids par rapport au poids total de polyoxyalkylène-polyoxyéthylène-polyols.

6. Procédé suivant la revendication 4, caractérisé en ce que les polyéther-polyols usuels sont utilisés sous forme de polymères de greffage-polyéther-polyol ou de dispersions polyéther-polyol-matière de charge.

7. Procédé suivant la revendication 1, caractérisé en ce que l'on emploie comme agent porogène de l'eau en une proportion comprise entre 0,5 et 20 parties en poids pour 100 parties en poids de polyoxyalkylène-polyoxyéthylène-polyols et de polyéther-polyols usuels éventuels.

## Claims

1. A process for the preparation of a resilient and flexible polyurethane foam, wherein first, in a first stage, polyoxyalkylene polyoxyethylene polyols which have terminal oxyethylene groups, a degree of ethoxylation of from 1 to 13 and a content of primary hydroxyl groups at the corresponding degree of ethoxylation, taking into acount the unsaturated moieties, with at least the value of curve A, curve A describing the dependence of the content of primary hydroxyl groups on the degree of ethoxylation, are prepared by

a) subjecting alkylene oxides from the group consisting of 1,2- and 2,3-butylene oxide, styrene oxides which may be substituted at the phenyl group, cyclohexene oxide and 1,2-propylene oxide or a mixture of the stated alkylene oxides and ethylene oxide in a weight ratio of from 100:0 to 60:40 to an addition reaction with difunctional to tetrafunctional initiator molecules having molecular weights of up to 198 in the presence of from 0.01 to 0.25 mole of a basic catalyst per equivalent of Zerewitinoff-active hydrogen atoms of the initiator molecule to a conversion of not less than 20% by weight of the added alkylene oxide,

b) then if necessary increasing the amount of catalyst stepwise to 0.1—0.3 mole as the polymerization progresses and thereafter

c) further polymerizing the resulting crude polyetherpolyol with not more than 30% by weight, based on the weight of the crude polyetherpolyol, of ethylene oxide in the presence of from 0.1 to 1.0 mole of basic catalyst per equivalent of the reactive hydrogen atom, and

d) after each addition of the catalyst, separating off the low-boiling alcohol or water formed during formation of the alcoholate and, after the beginning of the polymerization, separating off the unconverted alkylene oxides before each further addition of catalyst, and thereafter, in a second stage, reacting the resulting block polyetherpolyol with an aliphatic, cycloaliphatic, araliphatic or aromatic polyisocyanate in the presence of blowing agents, catalysts and, if required, chain extenders or crosslinking agents, assistants and/or additives.

2. A process as claimed in claim 1, wherein the polyoxyalkylene polyoxyethylene polyols have functionalities of from 2 to 4 and hydroxyl numbers of from 10 to 250.

3. A process as claimed in claim 1, wherein the polyoxyalkylene polyoxyethylene polyols have degrees of ethoxylation of from 2 to 8.

4. A process as claimed in claim 1, wherein the polyoxyalkylene polyoxyethylene polyols are used as a mixture with conventional polyetherpolyols.

5. A process as claimed in claim 4, wherein the mixture contains not less than 40% by weight, based on the total weight, of polyoxyalkylene polyoxyethylene polyols.

6. A process as claimed in claim 4, wherein the conventional polyetherpolyols are used in the form of graft polymer/polyetherpolyols or filler/polyetherpolyol dispersions.

7. A process as claimed in claim 1, wherein water, in an amount of from 0.5 to 20 parts by weight per 100 parts by weight of polyalkylene polyoxyethylene polyols and optional conventional polyetherpolyols, is used as the blowing agent.